# EUROPEAN PATENT APPLICATION

(11) **EP 4 477 878 A1**
(43) Date of publication of application: **18.12.2024**
(21) Application number: 22925083.2
(22) Date of filing: 17.10.2022
(51) Int. Cl.: F03D 13/25, B63B 1/10, B63B 35/44

(54) **FLOATING TYPE OFFSHORE WIND STRUCTURE HAVING IMPROVED STRUCTURAL STRENGTH AND REDUCED WEIGHT**

(30) Priority: 07.02.2022 KR 20220015419
(71) Applicant: Korea Institute of Ocean Science & Technology, Busan 49111 (KR); Front Energies Llc, Houston, Texas 77084 (US)
(72) Inventor: KIM, Kyong Hwan, Daejeon 34061 (KR); PARK, Se Wan, Daejeon 34195 (KR); HA, Yoon Jin, Daejeon 34073 (KR); PARK, Ji Yong, Daejeon 34198 (KR); ROH, Chan, Sejong 30126 (KR); AHN, Hyeon Jeong, Changwon-si Gyeongsangnam-do 51778 (KR); LIM, Chang Hyuck, Sejong 30150 (KR); KIM, Jang Whan, Spring, Texas 77379 (US); KYOUNG, Jo Hyun, Katy, Texas 77494 (US); BAQUET, Aldric, Houston, Texas 77055 (US); SHEN, Zhirong, Cypress, Texas 77433 (US)
(74) Representative: Novagraaf Technologies
(86) International application number: PCT/KR2022/015754
(87) International publication number: WO 2023/149616

(57) **Abstract**

The present invention may provide a floating type offshore wind structure having improved structural strength and reduced weight, the structure comprising: a floating body having buoyancy in the seat; and a wind power generation unit fixed to the floating body, wherein the floating body includes a plurality of columns disposed at the vertex positions of a triangle, respectively, and a plurality of pontoon units disposed in the form of a triangle, so as to connect the plurality of columns, the wind power generation unit is placed at any one of the plurality of columns, each of the plurality of columns includes a first side in contact with a first pontoon unit which is any one of the plurality of pontoon units, and a second side in contact with a second pontoon unit which is another one of the plurality of pontoon units, and each of the first side and the second side is a planar surface.

## Description

### [Technical Field]

Embodiments relate to a floating type offshore wind structure having improved structural strength and reduced weight and to floating type offshore wind structure having improved structural strength and reduced weight, in which a plurality of pontoon units are disposed to support a wind turbine.

### [Background Art]

A floating type offshore wind structure is a structure that floats on the sea and is a device for supporting a wind turbine. A tower of the wind turbine is fixed to a floating body. The movement of the floating type offshore wind structure is controlled by a mooring system.

The floating body may be formed by combining a plurality of columns and connectors connecting the columns. Each column is a buoyant body with a cavity therein. The tower of the wind turbine may be fixed to any one of the plurality of columns.

Japanese Patent Application Laid-Open No. 2010-280301 (2010.12.16) discloses a floating body including one column disposed at the center thereof and three columns near the center. The tower of the wind turbine is fixed to the column disposed at the center.

The floating body on which the wind turbine is mounted as described above greatly floats due to wind and waves at sea. When the floating body floats greatly, there is a high risk of failure in a wind turbine or a power generation facility. To reduce the floating of the floating body, it is recommended to increase a size of the floating body or increase a draft, but when the size of the floating body increases, there is a problem that manufacturing and management are difficult.

### [Disclosure]

### [Technical Problem]

Embodiments are directed to providing a floating type offshore wind structure capable of having a small size, significantly reduced floating of a floating body, and increased strength.

The object of the present invention is not limited to the above-described object, and other objects that are not mentioned will be able to be clearly understood by those skilled in the art from the following description.

### [Technical Solution]

An embodiment may provide a floating type offshore wind structure having improved structural strength and reduced weight, which includes a floating body having buoyancy at sea, and a wind power generation unit fixed to the floating body, wherein the floating body includes a plurality of columns disposed at vertex locations of a triangle, respectively, and a plurality of pontoon units disposed in a triangular shape to connect the plurality of columns, the wind power generation unit is disposed on any one of the plurality of columns, the column includes a first surface in contact with a first pontoon unit that is any one of the plurality of pontoon units, and a second surface in contact with a second pontoon unit that is another of the plurality of pontoon units, and the first surface and the second surface are each a planar surface.

A size of the first surface may correspond to a size of a cross section of the first pontoon unit, and a size of the second surface may correspond to a size of a cross section of the second pontoon unit.

The first surface and the second surface may be disposed adjacent to each other.

The floating type offshore wind structure may include a third surface adjacent to and in contact with the first surface or the second surface, and the third surface may be a planar surface.

When viewed in a vertical direction, a first angle formed by the first surface and the second surface may be the same as a second angle formed by the first surface and the third surface or a third angle formed by the second surface and the third surface.

The first angle and the second angle may each be 120°.

When viewed in a vertical direction, a first angle formed by the first surface and the second surface may be greater than a second angle formed by the first surface and the third surface or a third angle formed by the second surface and the third surface.

The first angle may be 120°, and the second angle may be 90°.

The floating type offshore wind structure may include corner plates each disposed near vertices of the triangle to connect the neighboring pontoon units at the vertex, and the corner plates may be disposed to be rotationally symmetrical with respect to a center of the triangle.

When viewed in a vertical direction, the column may be polygonal.

### [Advantageous Effects]

According to the embodiments, by arranging the corner plate near the vertex of the pontoon unit having the arrangement of the triangular shape, there is an advantage that it is possible to significantly reduce the floating of the floating body by increasing buoyancy and strength without increasing the size of the floating body.

According to the embodiments, since the size of the floating body is not increased, there is an advantage that assembly is easy through the crane having the short reach distance.

According to the embodiments, by providing the column including the first surface and the second surface, which have a planar cross section in contact with the pontoon unit, corresponding to the pontoon unit having the quadrangular cross section to sufficiently absorb the external force transmitted from the pontoon unit, there is an advantage that it is possible to increase the structural strength of the floating body.

According to the embodiments, by forming the cross section of the column in the polygonal shape, there is an advantage that manufacturing is easy compared to the column having a circular cross section.

According to the embodiments, by forming the cross section of the column in the polygonal shape, there is an advantage that it is possible to facilitate docking and reduce the reach distance when docking.

### [Description of Drawings]

FIG. 1 is a view showing a floating type offshore wind structure having improved structural strength and reduced weight according to one embodiment.
FIG. 2 is a plan view of a floating body shown in FIG. 1.
FIG. 3 is a plan view showing a column.
FIG. 4 is a plan view showing the column and a pontoon unit.
FIG. 5 is a plan view showing a floating body according to a modified example.
FIG. 6 is a plan view showing a column and a pontoon unit shown in FIG. 5.
FIG. 7 is a view showing a side cross-sectional view of the floating body.

### [Mode for Invention]

Hereinafter, exemplary embodiments according to the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a first component is described as being "connected," "coupled," or "joined" to a second component, it may include a case in which the first component is directly connected, coupled, or joined to the second component, but also a case in which the first component is "connected," "coupled," or "joined" to the second component by other components present between the first component and the second component.

In addition, when the first component is described as being formed or disposed on "on (above) or below (under)" the second component, "on (above)" or "below (under)" may include not only a case in which two components are in direct contact with each other, but also a case in which one or more third components are formed or disposed between the two components. In addition, when described as "on (above) or below (under)," it may include the meaning of not only an upward direction but also a downward direction based on one component.

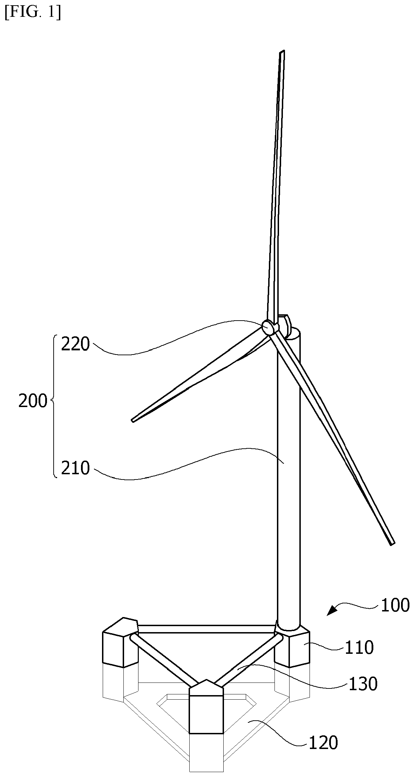

FIG. 1 is a view showing a floating type offshore wind structure according to one embodiment.

Referring to FIG. 1, a floating type offshore wind structure according to an embodiment may include a floating body 100 and a wind power generation unit 200.

The floating body 100 may be a buoyant body including a cavity therein. The floating body 100 may include three columns 110, three pontoon units 120, and a plurality of connectors 130.

The three columns 110 may each have a cylindrical shape. The three columns 110 are disposed to be located at vertices of a triangle, respectively, when viewed from above. The wind power generation unit 200 may be disposed on any one of the three columns 110.

The pontoon unit 120 may include a first pontoon unit 120A, a second pontoon unit 120B, and a third pontoon unit 120C.

The first pontoon unit 120A, the second pontoon unit 120B, and the third pontoon unit 120C connect the three columns 110 to form sides of an equilateral triangle, respectively, when viewed from above. The pontoon unit 120 may have a bar-shaped shape with a constant thickness in a vertical direction. In addition, each pontoon unit 120 may have a quadrangular cross-section and have flat upper and lower surfaces.

At least some of the pontoon units 120 and the columns 110 are submerged in water to generate buoyancy.

The plurality of connectors 130 serves to increase the rigidity of the floating body 100 and secure structural stability by connecting the columns 110. The connectors 130 may also be disposed to be rotationally symmetrical with respect to a center C of the triangle formed by the pontoon unit 120, thereby balancing a load applied to the floating body 100.

The wind power generation unit 200 may include a tower 210 fixed to any one of the three columns 110 and a nacelle 220 disposed on the tower 210.

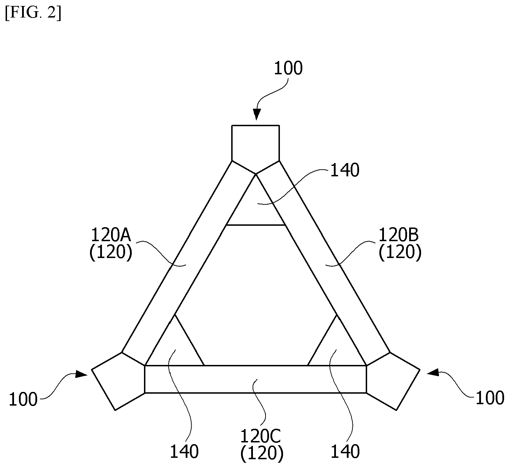

FIG. 2 is a plan view of the floating body 100 shown in FIG. 1.

Referring to FIG. 2, the floating body 100 includes a plurality of corner plates 140. The corner plate 140 is intended to increase buoyancy and strength without increasing the size of the floating body 100 and disposed near each vertex of the triangle formed by the pontoon units 120.

The corner plate 140 may be disposed to connect the neighboring pontoon units 120 near each vertex of the triangle formed by the pontoon units 120. That is, three corner plates 140 may be each connected to the column 110 and disposed between the pontoon units 120 connected to the column 110.

The corner plates 140 may be disposed to be rotationally symmetrical with respect to a center C of the triangle formed by the pontoon units 120. This is intended to balance a load of the floating body 100 and structurally secure the balance of the floating body 100.

When viewed from above, an inner surface 163 of the corner plate 140 may be a planar surface that forms an angle with the inner surface of the pontoon unit 120.

Since the corner plate 140 is disposed inside the pontoon unit 120, there is an advantage that the buoyancy and weight of the floating body 100 can be increased without increasing the size of the floating body 100 externally. In addition, the corner plates 140 have an advantage of increasing the strength of the floating body 100 by structurally supporting the pontoon units 120 and the columns 110 near connection portions of the columns 110.

Meanwhile, since the column 110 on which the wind power generation unit 200 is disposed may be disposed close to a crane, the pontoon unit 120 disposed in the triangular shape has an advantage that assembly is easy through the crane having a short reach distance.

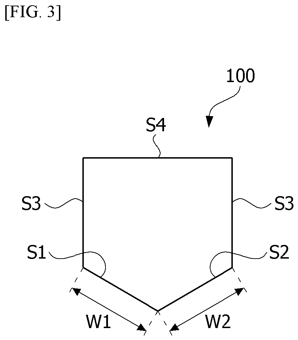

FIG. 3 is a plan view showing a column.

Referring to FIG. 3, the column 110 includes a first surface S1 and a second surface S2. The first surface S1 is a surface in contact with any one (e.g., the first pontoon unit) of the three pontoon units. The second surface S2 is a surface in contact with another (e.g., the second pontoon unit) of the three pontoon units. The first surface S1 and the second surface S2 may be planar surfaces. In addition, a third surface may also be a planar surface.

The column 110 may include a fourth surface adjacent to the third surface. The fourth surface may also be a planar surface.

The first surface S1 and the second surface S2 are disposed adj acent to each other. The column 110 may include the third surface S3 adjacent to the first surface S1. In addition, the column 110 may include another third surface S3 adjacent to the second surface S2. As an example, the column 110 may be formed of a member having a pentagonal cross section to include the first surface S1 and the second surface S2.

When viewed from above, a width W1 of the first surface S1 and a width W2 of the second surface S2 may be the same.

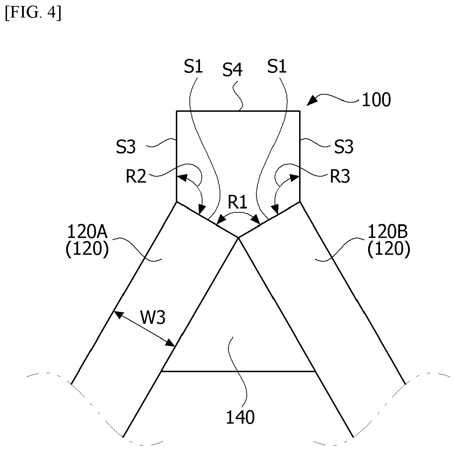

FIG. 4 is a plan view of the column 110 and the pontoon unit 120.

Referring to FIGS. 3 and 4, the first surface S1 may be in contact with the first pontoon unit 120A. The second surface S2 may be in contact with the second pontoon unit 120B.

When viewed from above, assuming that an angle formed by the first surface S1 and the second surface S2 is referred to as a first angle R1, an angle formed by the first surface S1 and the third surface S3 is referred to as a second angle R2, and an angle formed by the second surface S2 and the third surface S3 is referred to as a third angle R3, the first angle R1 may be the same as the second angle R2. In addition, the first angle R1 may be equal to the third angle R3.

As an example, the first angle R1, the second angle R2, and the third angle R3 may all be 120°.

The width W1 of the first surface S1 and a width W3 of the pontoon unit 120 may be the same.

The width W2 of the second surface S2 and the width W3 of the pontoon unit 120 may be the same.

As described above, by providing the column 110 including the first surface S1 and the second surface S2 that have a planar cross section in contact with the pontoon unit 120 corresponding to the pontoon unit 120 having a quadrangular cross section to sufficiently absorb an external force transmitted from the pontoon unit 120, there is an advantage that the structural strength of the floating body 100 is increased.

In addition, by forming the cross section of the column 110 in a polygonal shape, there is an advantage that manufacturing is easy compared to the column 110 having a circular cross section.

In addition, by forming the cross section of the column 110 in the polygonal shape, there is an advantage that it is possible to facilitate docking and reduce the reach distance when docking.

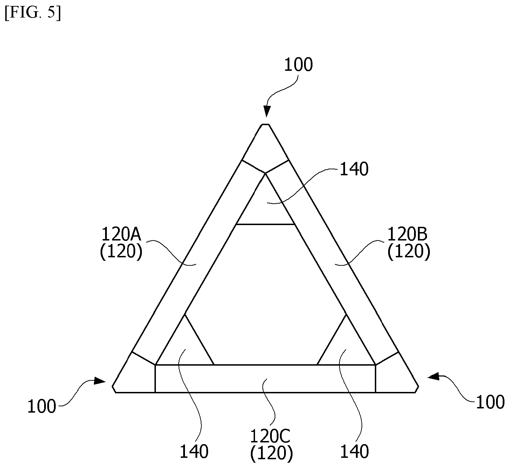

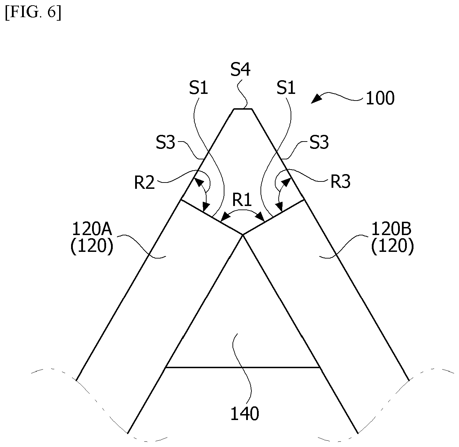

FIG. 5 is a plan view showing the floating body 100 according to a modified example, and FIG. 6 is a plan view showing the column 110 and the pontoon unit 120 shown in FIG. 5.

Referring to FIGS. 5 and 6, the floating body according to the modified example may have the first angle R1 greater than the second angle R2. In addition, the first angle R1 may be greater than the third angle R3. As an example, the first angle R1 may be 120°, and the second angle R2 and the third angle R3 may each be 90°.

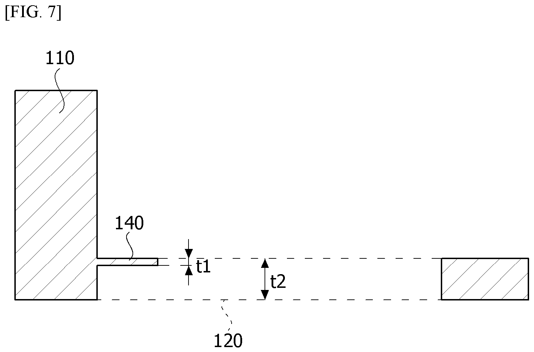

FIG. 7 is a view showing a side cross-section view of the floating body 100.

Referring to FIG. 7, a vertical thickness t1 of each corner plate 140 may be smaller than a vertical thickness t2 of the pontoon unit 120. For example, an upper surface of the pontoon unit 120 and an upper surface of the corner plate 140 may be disposed coplanarly. A lower surface of the pontoon unit 120 and a lower surface of the corner plate 140 may be disposed on different planes.

The floating type offshore wind structure having improved structural strength and reduced weight according to an exemplary embodiment of the present invention has been described above in detail with reference to the accompanying drawings.

The above-described embodiment of the present invention should be understood in all respects as illustrative and not restrictive, and the scope of the present invention will be determined by the claims to be described below rather than the above-described detailed description. In addition, not only the meanings and scopes of the claims but also all changeable or modifiable forms derived from the equivalent concept thereof should be construed as being included in the scope of the present invention.

## Claims

1. A floating type offshore wind structure having improved structural strength and reduced weight, the floating type offshore wind structure comprising:
a floating body having buoyancy at sea; and
a wind power generation unit fixed to the floating body,
wherein the floating body includes a plurality of columns disposed at vertex locations of a triangle, respectively, and a plurality of pontoon units disposed in a triangular shape to connect the plurality of columns,
the wind power generation unit is disposed on any one of the plurality of columns,
the column includes a first surface in contact with a first pontoon unit that is any one of the plurality of pontoon units, and a second surface in contact with a second pontoon unit that is another of the plurality of pontoon units, and
the first surface and the second surface are each a planar surface.

2. The floating type offshore wind structure of claim 1, wherein a size of the first surface corresponds to a size of a cross section of the first pontoon unit, and
a size of the second surface corresponds to a size of a cross section of the second pontoon unit.

3. The floating type offshore wind structure of claim 2, wherein the first surface and the second surface are disposed adjacent to each other.

4. The floating type offshore wind structure of claim 3, comprising a third surface adjacent to and in contact with the first surface or the second surface, and
the third surface is a planar surface.

5. The floating type offshore wind structure of claim 4, wherein, when viewed in a vertical direction, a first angle formed by the first surface and the second surface is the same as a second angle formed by the first surface and the third surface or a third angle formed by the second surface and the third surface.

6. The floating type offshore wind structure of claim 5, wherein the first angle and the second angle are each 120°.

7. The floating type offshore wind structure of claim 4, wherein, when viewed in a vertical direction, a first angle formed by the first surface and the second surface is greater than a second angle formed by the first surface and the third surface or a third angle formed by the second surface and the third surface.

8. The floating type offshore wind structure of claim 7, wherein the first angle is 120°, and the second angle is 90°.

9. The floating type offshore wind structure of claim 1, comprising corner plates each disposed near vertices of the triangle to connect the neighboring pontoon units at the vertex, and
the corner plates are disposed to be rotationally symmetrical with respect to a center of the triangle.

10. The floating type offshore wind structure of claim 1, wherein, when viewed in a vertical direction, the column is polygonal.
